# EUROPÄISCHE PATENTSCHRIFT

(11) **EP 2 989 306 B1**
(45) Veröffentlichungstag und Bekanntmachung des Hinweises auf die Patenterteilung: **15.03.2017**
(21) Anmeldenummer: 14721247.6
(22) Anmeldetag: 16.04.2014
(51) Int. Cl.: F04B 43/02, F04B 53/10, F01N 3/20, F04C 14/06, F04C 5/00

(54) **VERFAHREN ZUM BETRIEB EINER VORRICHTUNG ZUR DOSIERTEN BEREITSTELLUNG EINER FLÜSSIGKEIT**
METHOD OF OPERATION OF A DEVICE FOR THE DOSED SUPPLY OF A LIQUID
PROCÉDÉ DE MISE EN OEUVRE D'UN DISPOSITIF DE DOSAGE D'UN LIQUIDE

(30) Priorität: 26.04.2013 DE 102013104250
(43) Veröffentlichungstag der Anmeldung: 02.03.2016
(73) Patentinhaber: Continental Automotive GmbH, 30165 Hannover (DE)
(72) Erfinder: BRÜCK, Rolf, 51429 Bergisch Gladbach (DE); HODGSON, Jan, 53840 Troisdorf (DE)
(86) Internationale Anmeldenummer: PCT/EP2014/057833
(87) Internationale Veröffentlichungsnummer: WO 2014/173786

(56) Entgegenhaltungen:
- WO-A1-2012/126544
- DE-A1-102011 016 967
- US-A- 4 332 534

## Beschreibung

Die Erfindung betrifft ein Verfahren zum Betrieb einer Vorrichtung zur dosierten Bereitstellung einer Flüssigkeit. Eine solche Vorrichtung kann auch als Fördervorrichtung und/oder als Dosiervorrichtung bezeichnet werden. Eine solche Vorrichtung kann beispielsweise in einem Kraftfahrzeug eingesetzt werden, um einer Abgasbehandlungsvorrichtung des Kraftfahrzeugs ein flüssiges Additiv zur Abgasreinigung zuzuführen. In Abgasbehandlungsvorrichtungen, die zum Betrieb ein flüssiges Additiv benötigen, wird beispielsweise das Verfahren der selektiven katalytischen Reduktion (SCR-Verfahren; SCR = Selective Catalytic Reduction) durchgeführt. Bei diesem Verfahren werden Stickstoffoxidverbindungen im Abgas einer Verbrennungskraftmaschine unter Zuhilfenahme eines Reduktionsmittels reduziert. Als Reduktionsmittel wird üblicherweise Ammoniak verwendet. Ammoniak wird in Kraftfahrzeugen normalerweise nicht direkt bevorratet, sondern in Form einer Reduktionsmittelvorläuferlösung, die als Flüssigkeit in einem Tank gespeichert und mit einer entsprechenden Vorrichtung bereitgestellt wird, die gemäß dem hier beschriebenen Verfahren betrieben werden kann. Eine Flüssigkeit, die in diesem Zusammenhang besonders häufig zum Einsatz kommt, ist Harnstoff-Wasser-Lösung, die für den Zweck der Abgasreinigung mit einem Harnstoffgehalt von 32,5 % unter dem Handelsnamen AdBlue® erhältlich ist.

Für die erfolgreiche Abgasreinigung ist eine genau dosierte Zugabe der Flüssigkeit zu einer Abgasbehandlungsvorrichtung notwendig, dass heißt, dass die Menge der zugegebenen Flüssigkeit einem Bedarf in der Abgasbehandlungsvorrichtung möglichst genau entspricht. Darüber hinaus sollte eine Vorrichtung zur dosierten Bereitstellung einer Flüssigkeit möglichst kostengünstig herstellbar und betreibbar sein und möglichst nicht durch gefrierende Flüssigkeit innerhalb der Vorrichtung beschädigt werden können, weil die beschriebenen Flüssigkeiten bei niedrigen Temperaturen einfrieren können. Niedrige Temperaturen treten in Kraftfahrzeugen beispielsweise während längerer Stillstandphasen auf.

Zur Förderung derartiger Flüssigkeiten haben sich Vorrichtungen als besonders vorteilhaft heraus gestellt, die eine verzweigungsfreie Förderleitung von einem Tank zu einem Injektor an einer Abgasbehandlungsvorrichtung aufweisen. Derartige Vorrichtungen zur Bereitstellung haben typischerweise keine Rücklaufleitung, welche eine Kreisförderung von Flüssigkeit durch die Vorrichtung und zurück in den Tank ermöglicht. Eine solche Rücklaufleitung wurde vorgesehen, weil hierüber Luftblasen in der Vorrichtung leicht und sicher entfernt werden konnten. Jedoch stellt eine solche Rücklaufleitung einen erhöhten Kostenaufwand dar.

Die Dosierung der Flüssigkeit mit Hilfe der Vorrichtung erfolgt vorzugsweise mit Hilfe eines Injektors (Dosierventils), welcher elektronisch angesteuert geöffnet und geschlossen werden kann. Die von der Vorrichtung abgegebene Menge an Flüssigkeit ist dabei typischerweise proportional zur Öffnungszeit des Injektors. Dafür muss der an dem Injektor anliegende Druck der Flüssigkeit möglichst genau einer Vorgabe entsprechen, weil die von einem Injektor während einer vorgegebenen Öffnungszeit dosierte Menge an Flüssigkeit eine starke Abhängigkeit von dem Druck der Flüssigkeit an dem Injektor aufweist.

Zwischen mehreren einzelnen Dosiervorgängen des Injektors ist es wünschenswert, dass der Druck der Flüssigkeit in einen Druckleitungsabschnitt zwischen einer Pumpe und dem Injektor im Wesentlichen konstant gehalten wird, damit der Injektor unmittelbar dann, wenn eine Dosieranforderung an den Injektor gestellt wird, Flüssigkeit wie gewünscht dosieren kann.

Vorrichtungen zur Bereitstellung einer Flüssigkeit weisen zur Förderung der Flüssigkeit und zur Aufrechterhaltung des Drucks an dem Injektor typischerweise mindestens eine Pumpe auf. Die für derartige Vorrichtungen üblicherweise verwendeten Pumpen haben allerdings den Nachteil, dass durch die Pumpe hindurch eine Rückströmung an Flüssigkeit auftreten kann. Durch diese Rückströmung wird der Druck an dem Injektor verfälscht und somit die Dosiergenauigkeit verringert.

Hiervon ausgehend ist es Aufgabe der hier vorliegenden Erfindung, die im Zusammenhang mit dem Stand der Technik geschilderten technischen Probleme zu lösen bzw. zumindest zu lindern. Es soll insbesondere ein besonders vorteilhaftes Verfahren zum Betrieb einer Vorrichtung zur dosierten Bereitstellung einer Flüssigkeit offenbart werden, mit welchem eine besonders hohe Dosiergenauigkeit der Bereitstellung der Flüssigkeit erreicht werden kann.

Diese Aufgaben werden gelöst mit einem Verfahren gemäß den Merkmalen des Patentanspruchs 1. Weitere vorteilhafte Ausgestaltungen des Verfahrens sind in den abhängigen Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Vorgeschlagen wird demnach ein Verfahren zum Betrieb einer Vorrichtung zur dosierten Bereitstellung einer Flüssigkeit, zumindest aufweisend mindestens eine Pumpe zur Förderung der Flüssigkeit, wobei die Pumpe ein Pumpengehäuse mit mindestens einem Einlass und mindestens einem Auslass aufweist, wobei an dem Pumpengehäuse ein Exzenter angeordnet ist und wobei zwischen dem Pumpengehäuse und dem Exzenter eine verformbare Membran angeordnet ist, wobei die verformbare Membran und das Pumpengehäuse mindestens einen Förderweg von dem mindestens einen Einlass zu dem mindestens einen Auslass begrenzen und mindestens eine Abdichtung des Förderwegs ausbilden, wobei die mindestens eine Abdichtung durch eine Bewegung des Exzenters zur Förderung der Flüssigkeit entlang des Förderwegs verschiebbar ist. Dabei weist das Verfahren zumindest die folgenden Schritte auf:
a) Feststellen einer angeforderten Dosiermenge an Flüssigkeit;
b) Aktivieren der mindestens einen Pumpe, um mit der mindestens einen Pumpe die Flüssigkeit zu fördern;
c) Festlegen eines Betriebsstopps der mindestens einen Pumpe, wenn die geförderte Menge Flüssigkeit der angeforderten Dosiermenge entspricht;
   und
d) Abschalten der mindestens einen Pumpe, wenn der Exzenter sich in einer vorgegebenen Parkposition befindet.

Die Vorrichtung weist vorzugsweise eine Saugleitung auf, die sich ausgehend von der mindestens einen Pumpe hin zu einem Tank erstreckt, in welchem die Flüssigkeit gespeichert ist. Die Saugleitung ist vorzugsweise an den Einlass der Pumpe angeschlossen. Vorzugsweise hat die Vorrichtung darüber hinaus eine Druckleitung, die sich ausgehend von der Pumpe hin zu einer Zugabestelle zur Zugabe der Flüssigkeit zu einer Abgasbehandlungsvorrichtung erstreckt. Diese Druckleitung ist an den Auslass der Pumpe angeschlossen. Grundsätzlich ist auch möglich, dass mehrere (parallele) Saugleitungen zu mehreren Pumpen (beispielsweise unterschiedlicher Förderleistung) führen, die jeweils (insbesondere verzweigungsfrei) über Druckleitungen mit einem einzelnen Injektor oder mehreren Injektoren verbunden sind. Bevorzugt sind weitere Verzweigungen des Leitungssystems der Vorrichtung nicht vorgesehen. Insbesondere existiert vorzugsweise keine Rücklaufleitung, die eine Verbindung des Auslasses der Pumpe zurück zu dem Tank herstellt.

Eine Pumpe mit dem beschriebenen Aufbau kann als Orbitalpumpe bezeichnet werden und ist zum Beispiel aus US 4 332 534 A bekannt.
- Der Förderweg wird von einem Spalt zwischen der verformbaren Membran und dem Pumpengehäuse gebildet. Die verformbare Membran ist vorzugsweise zwischen dem Exzenter und dem Pumpengehäuse derart angeordnet, dass die verformbare Membran im Bereich der mindestens einen Abdichtung zwischen dem Gehäuse und dem Exzenter gequetscht ist. Der Spalt zwischen der verformbaren Membran und dem Pumpengehäuse wird dadurch im Bereich der mindestens einen Abdichtung fluiddicht verschlossen. Der Spalt bzw. der Förderweg ist während des Betriebs der Vorrichtung mit der Flüssigkeit gefüllt. Entlang des Förderwegs teilt die mindestens eine Abdichtung den Förderweg auf, so dass mindestens ein (geschlossenes) Fördervolumen gebildet ist. Durch die Verschiebung der Abdichtung durch eine Bewegung des Exzenters wird dieses Fördervolumen mit einer Förderrichtung ausgehend von dem Einlass der Pumpe hin zu dem Auslass der Pumpe verschoben. Dadurch findet eine Förderung der Flüssigkeit statt.

Das Pumpengehäuse der Pumpe ist vorzugsweise ein Ring oder eine zylindrische Kammer, in welcher der Exzenter innen (zentrisch) angeordnet ist. Das Pumpengehäuse kann dann als (äußerer) Stator der Pumpe angesehen werden, während der Exzenter als (innerer) Rotor bezeichnet werden kann. Gemäß einer weiteren Ausführungsform der beschriebenen Pumpe ist es allerdings auch möglich, dass das Pumpengehäuse einen inneren Stator der Pumpe bildet, welcher von dem Exzenter umgeben ist. Dann bildet der Exzenter einen äußeren Rotor. Der Einlass und der Auslass sind an dem Pumpengehäuse angeordnet und ermöglichen das Einströmen und das Ausströmen der Flüssigkeit in das Pumpengehäuse bzw. in den Förderweg zwischen der verformbaren Membran und dem Pumpengehäuse.

An der Pumpe ist vorzugsweise auch mindestens eine Trennung vorgesehen, die eine nicht gewollte Rückströmung der Flüssigkeit von dem Auslass zu dem Einlass verhindert. Diese Trennung kann beispielsweise als Eindellung in dem Pumpengehäuse oder als Aufdickung der verformbaren Membran ausgebildet sein. Diese Trennung ist (permanent bzw. ortsfest) zwischen dem Auslass und dem Einlass der Pumpe angeordnet. Die Trennung verhindert, dass durch die Bewegung des Exzenters relativ zu dem Pumpengehäuse zu irgendeinem Zeitpunkt eine direkte Verbindung für die Flüssigkeit von dem Auslass zu dem Einlass gebildet wird. Die Trennung kann auch dadurch gewährleistet sein, dass die verformbare Membran zwischen dem Auslass und dem Einlass an dem Gehäuse verspannt, verschraubt oder verklebt ist.

Der Exzenter ist vorzugsweise mehrteilig ausgeführt. Der Exzenter weist vorzugsweise einen (inneren) Exzenterbereich, welcher eine exzentrische Drehbewegung ausführt, und einen (äußeren) Lagerring, welcher den Exzenterbereich umgibt, auf. Zwischen dem Exzenterbereich und dem Lagerring befindet sich vorzugsweise mindestens ein Lager. Dieses Lager kann ein Kugellager oder ein Rollenlager sein. Der Exzenterbereich des Exzenters führt im Betrieb eine Drehbewegung um eine Rotationsachse aus. Durch eine äußere Form des Exzenters ergibt sich eine exzentrische Bewegung einer Oberfläche des Exzenterbereiches. Diese exzentrische Bewegung wird auf den Lagerring übertragen. Durch das Lager zwischen Exzenterbereich und Lagerring wird verhindert, dass die Drehbewegung von dem Exzenterbereich zusammen mit der exzentrischen Bewegung auf den Lagerring übertragen wird. Durch die Kombination eines Exzenterbereiches und eines Lagerrings mit dazwischen angeordnetem Lager kann eine exzentrische Drehbewegung des Exzenterbereiches in eine exzentrische Taumelbewegung des Lagerrings ohne Drehbewegungsanteil umgewandelt werden. Die Tatsache, dass die Bewegung des Lagerrings keinen Drehbewegungsanteil aufweist, ermöglicht es, Schubspannungen in der verformbaren Membran zu reduzieren. Vorzugsweise wird die verformbare Membran von dem Exzenter nur gewalkt. An einer Kontaktfläche des Exzenters zu der verformbaren Membran wirken vorzugsweise nur Druckkräfte und im wesentlichen keine Reibungskräfte, die durch Reibung des Exzenters an der Membran auftreten würden, wenn die Kontaktfläche zu der verformbaren Membran auch einen Drehbewegungsanteil aufweisen würde. Eine entsprechende Aufteilung des Exzenters in Exzenterbereich und Lagerring ist auch möglich, wenn der Exzenter ein äußerer Rotor ist, der um ein Gehäuse herum angeordnet ist, welches einen inneren Stator bildet.

Beim Betrieb der Vorrichtung gemäß dem hier beschriebenen Verfahren wird zunächst eine angeforderte Dosiermenge an Flüssigkeit festgestellt (Schritt a)). Dies kann beispielsweise von einem Steuergerät durchgeführt werden, welches den Bedarf einer Abgasbehandlungsvorrichtung an Flüssigkeit überwacht und die mit der Vorrichtung bereitzustellende Menge an Flüssigkeit entsprechend diesem Bedarf festlegt. Daraufhin wird in Schritt b) die mindestens eine Pumpe aktiviert, um (exakt nur) die angeforderte Dosiermenge zu fördern und an einer Zugabestelle zur Zugabe der Flüssigkeit bereitzustellen. Die Pumpe wird dabei mit Hilfe eines (elektrischen) Antriebs angetrieben, so dass der Exzenter eine Bewegung ausführt.

Anschließend wird in Schritt c) der Zeitpunkt festgestellt, wann die von der mindestens einen Pumpe geförderte Menge Flüssigkeit der angeforderten Dosiermenge entspricht. Dies kann beispielsweise dadurch geschehen, dass der Winkel, um welchen der Exzenter gedreht wurde, bzw. die Anzahl an Umdrehungen, die der Exzenter seit Beginn des Schrittes b) ausgeführt hat, ausgewertet werden. Dies ist insbesondere dann möglich, wenn dieser Winkel bzw. die Anzahl der Umdrehungen proportional zur geförderten Flüssigkeitsmenge sind. Auch ist möglich, dass stromabwärts der mindestens einen Pumpe (beispielsweise an eine Zugabestelle) eine Durchflussmessung erfolgt, mit welcher festgestellt wird, wieviel Flüssigkeit bereits zu der Abgasbehandlungsvorrichtung gelangt ist. Wenn festgestellt wurde, dass die geförderte Menge der angeforderten Dosiermenge entspricht, wird ein Betriebsstopp der Pumpe festgelegt. Dies erfolgt vorzugsweise ebenfalls in einem Steuergerät.

Wenn ein Betriebsstopp festgelegt ist, erfolgt jedoch nicht in jedem Fall eine unmittelbare Abschaltung der Pumpe. Das Abschalten der Pumpe erfolgt gemäß Schritt d) erst, wenn der Exzenter sich in einer vorgegebenen Parkposition befindet. Eine vorgegebene Parkposition ist eine bestimmte Winkelstellung des Exzenters relativ zum Gehäuse. Daher wird mit der Festlegung des Betriebsstopps auch die aktuelle Position / Stellung des Exzenters überprüft und mit einer/mehreren vorgegebenen (ggf. pumpenspezifischen) Parkposition/en verglichen. Der Exzenter wird also ggf. nach Schritt c) noch weiter bewegt, bis dieser eine vorgegebene Parkposition erreicht hat. Das "Abschalten" der mindestens einen Pumpe betrifft also insbesondere einen Stillstand der Pumpe bzw. des Exzenters, muss aber nicht zwangsweise zur Beendigung der (unmittelbaren) Betriebsbereitschaft führen.

Dem beschriebenen Verfahren liegt die Überlegung zugrunde, dass es vorteilhaft sein kann, den Exzenter nur in einer definierten Parkposition abzustellen. Hierdurch wird eine besonders genaue Überwachung der Position des Exzenters relativ zu dem Gehäuse möglich. Durch eine Beschränkung auf eine diskrete Anzahl definierter Parkpositionen ist es insbesondere nicht erforderlich, für jede mögliche Stellung des Exzenters relativ zum Gehäuse Mittel zur Überwachung der Position des Exzenters vorzusehen.

Besonders vorteilhaft ist das Verfahren, wenn der Exzenter sich in der vorgegebenen Parkposition in einem Kräftegleichgewicht befindet.

Mit einem Kräftegleichgewicht ist gemeint, dass die auf den Exzenter wirkenden Kräfte sich derart gegenseitig aufheben, dass der Exzenter durch die wirkenden Kräfte nicht gedreht wird. Zur Aufrechterhaltung dieses Kräftegleichgewichts muss insbesondere nicht aktiv, zusätzliche Energie aufgebracht werden. Es ist beispielsweise nicht notwendig, dass ein Antrieb der Pumpe mit elektrischer Energie versorgt wird, um das Kräftegleichgewicht aufrecht zu erhalten. Auf den Exzenter wirken beispielsweise Druckkräfte, die durch den Druck der Flüssigkeit innerhalb der Pumpe bzw. innerhalb des Förderwegs ausgeübt werden. Außerdem wirken Reibungskräfte, die durch Reibung zwischen den beweglichen Komponenten der Pumpe erzeugt werden. Darüber hinaus kann auch ein innerer Widerstand gegenüber der Drehung des Exzenters vorliegen, der beispielsweise von der Verformung der verformbaren Membran bewirkt wird. Alle wirkenden Kräfte gleichen sich in der vorgegebenen Parkposition derart aus, dass keine resultierende Bewegung des Exzenters auftritt. Im Allgemeinen sind die von der verformbaren Membran auf den Exzenter ausgeübten Kräfte umso größer, je stärker die Membran verformt ist. Wenn die verformbare Membran besonders stark verformt ist, sind die von der verformbaren Membran auf den Exzenter ausgeübten Kräfte regelmäßig besonders groß und gegebenenfalls sogar wesentlich größer als die von dem Druck der Flüssigkeit auf den Exzenter ausgeübten Kräfte. Die vorgegebene Parkposition des Exzenters ist daher vorzugsweise so festgelegt, dass die verformbare Membran verhältnismäßig wenig verformt ist.

Zusätzlich können auch innere Kräfte des Antriebs einer Orbitalpumpe eine Auswirkung auf das Kräftegleichgewicht der Orbitalpumpe haben. Derartige innere Kräfte des Antriebs können beispielsweise durch Elektromagneten des Antriebs verursacht werden. Insbesondere, wenn der Antrieb der Pumpe mindestens einen Permanentmagneten umfasst, bewirkt dieser Permanentmagnet (auch wenn der Antrieb deaktiviert ist) eine Kraft auf den Exzenter, die das Kräftegleichgewicht am Exzenter derart beeinflussen kann, dass eine vorgegebene Parkposition ohne resultierende Kräfte auf den Exzenter durch den mindestens einen Permanentmagneten verschoben ist.

Das beschriebene Verfahren ist besonders vorteilhaft, wenn in der vorgegebenen mindestens einen Parkposition die mindestens eine Abdichtung den mindestens einen Auslass der Pumpe verschließt.

Ganz besonders bevorzugt ist hierbei, dass alle Auslässe der Pumpe mit der mindestens einen Abdichtung verschlossen sind. Die Flüssigkeit in dem Förderweg wirkt aufgrund ihres Drucks Kräfte auf den Exzenter bzw. auf die verformbare Membran aus. Je nach Ausrichtung des Exzenters können diese Kräfte mit einer radialen Richtung und/oder einer tangentialen Richtung wirken. Dabei sind radiale Kräfte hin zur Rotationsachse des Exzenters ausgerichtet, während tangentiale Kräfte tangential zur Rotationsachse des Exzenters verlaufen. Radial ausgerichtete Kräfte sind grundsätzlich unproblematisch, während tangentiale Kräfte gegebenenfalls ein Drehmoment auf den Exzenter bewirken. Wenn die vorgegebene Parkposition so ausgerichtet ist, dass die mindestens eine Abdichtung den mindestens einen Auslass der Pumpe verschließt bzw. direkt gegenüber positioniert ist, kann von dem Auslass aus lediglich eine radiale Druckkraft auf die verformbare Membran bzw. auf den Exzenter wirken. Die vom Auslass ausgehende Druckkraft ist für das Drehmoment, welches auf den Exzenter wirkt, entscheidend, weil der Druck am Auslass der Pumpe den Druck am Einlass der Pumpe regelmäßig weit übertrifft. Ein Verschließen des Auslasses der Pumpe mit der Abdichtung verkleinert dadurch die auf die verformbare Membran bzw. auf den Exzenter wirkenden Drehmomente. Vorzugsweise ist der gesamte Förderweg zwischen der verformbaren Membran und dem Pumpengehäuse derart mit dem Einlass der Pumpe verbunden, dass ein Druckausgleich mit dem Einlass erfolgen kann, wenn der Exzenter sich in der vorgegebenen Parkposition befindet. So kann ein einheitlicher Druck in dem Förderkanal erreicht werden. Die durch Druckkräfte verursachten Drehmomente auf den Exzenter gleich sich dann gegenseitig aus.

Die Vorgabe einer Parkposition ermöglicht es daher, eine ungewollte Drehung des Exzenters der Pumpe während einer Wartezeit zwischen mehreren Dosiervorgängen der Pumpe zu verhindern. Die Wartezeit beschreibt hierbei einen Zeitraum zwischen Schritt d) und einer erneuten Durchführung des beschriebenen Verfahrens (beginnend mit Schritt a)). So kann der Druck in einer Druckleitung von der Pumpe zum Injektor aufrechterhalten werden, ohne dass hierzu ein Energieeinsatz erforderlich ist.

Besonders vorteilhaft ist das beschriebene Verfahren, wenn in der vorgegebenen Parkposition die mindestens eine Abdichtung in Förderrichtung um einen vorgegebenen Winkel hinter dem Einlass der Pumpe angeordnet ist. Die Förderrichtung entspricht hierbei einer Drehrichtung des Exzenters von dem Einlass zu dem Auslass, mit welcher der Exzenter bei der Förderung gedreht wird. Der vorgegebene Winkel beträgt vorzugsweise zwischen 5° und 45°.

Ein Einlass und ein Auslass sind üblicherweise in der unmittelbaren Umgebung der mindestens einen Trennung angeordnet, welche eine Rückströmung von dem Auslass zurück zu dem Einlass verhindert. Mit der Umgebung der Trennung ist ein Drehwinkelbereich des Exzenters vor und hinter der Trennung gemeint. Gerade in der Umgebung der Trennung wird die verformbare Membran durch den Exzenter typischerweise besonders stark verformt, weil die Trennung das für die verformbare Membran zur Verfügung stehende Volumen zusätzlich reduziert. Daher kann es insbesondere vor der Trennung (wenn der Exzenter auf die Trennung bzw. den Auslass zu bewegt wird) und/oder hinter der Trennung (wenn der Exzenter von der Trennung weg bzw. von dem Auslass weg bewegt wird) zu zusätzlichen inneren Kräften kommen, die durch die verformbare Membran bewirkt werden und die eine Auswirkung auf das Kräftegleichgewicht an dem Exzenter haben. Aus diesem Grund ist es vorteilhaft, wenn die vorgegebenen Parkposition derart angeordnet ist, dass der Exzenter um einen (ersten) vorgegebenen Winkel hinter dem Einlass bzw. hinter der Trennung und/oder um einen zweiten vorgegebenen Winkel vor dem Auslass bzw. vor der Trennung angeordnet ist. Der (erste) vorgegebene Winkel beträgt vorzugsweise minimal 5° und maximal 45°. Der zweite vorgegebene Winkel beträgt vorzugsweise maximal 45° und minimal 5°. Es können auch beide beschriebenen vorgegebenen Parkpositionen (vor dem Einlass und hinter dem Auslass) vorgesehen sein.

In der vorgegebenen Parkposition, die um einen (ersten) vorgegebenen Winkel hinter dem Einlass vorgesehen ist, existiert typischerweise eine von der verformbaren Membran bewirkte Kraft, die in Förderrichtung des Exzenters wirkt und ein Drehmoment auf den Exzenter ausübt. Gleichzeitig existiert eine rückdrehende Kraft, die durch die Flüssigkeit auf den Exzenter ausgeübt wird. Diese beiden Kräfte gleichen sich gegenseitig aus.

Weiterhin vorteilhaft ist das Verfahren, wenn die Pumpe so aufgebaut ist, dass der Exzenter bei einer vollständigen Umdrehung mindestens einmal die vorgegebene Parkposition passiert.

Dies kann beispielsweise dadurch gewährleistet werden, dass der Exzenter genau eine (einzelne) Abdichtung ausbildet und die vorgegebene Parkposition so ausgebildet ist, dass die Abdichtung den einen (einzelnen) Auslass der Pumpe also dort verschließt. Wenn der Exzenter dann um 360° weiterbewegt wird, verschließt die Abdichtung erneut den Auslass, so dass sich der Exzenter wieder in der vorgegebenen Parkposition befindet.

Es ist auch denkbar, dass die Pumpe mehrere Auslässe hat oder der Exzenter mehrere Abdichtungen ausbildet, so dass beispielsweise bei einer vollständigen Umdrehung der Pumpe zwei vorgegebene Parkpositionen oder beispielsweise auch drei oder vier vorgegebene Parkpositionen vorgesehen sein können. Vorzugsweise gelangt der Exzenter bei einer Umdrehung des Exzenters um 180° erneut in eine vorgegebene Parkposition, wenn zwei vorgegebene Parkpositionen vorhanden sind. Wenn drei vorgegebene Parkpositionen vorhanden sind, muss der Exzenter vorzugsweise genau um 120° weitergedreht werden, um von einer vorgegebenen Parkposition in die nächste vorgegebene Parkposition zu gelangen.

Je mehr vorgegebene Parkpositionen vorhanden sind und umso kleiner der Winkel ist, um welchen der Exzenter weitergedreht werden muss, um von einer vorgegebenen Parkposition in die nächste vorgegebene Parkposition zu gelangen, umso genauer kann eine Förderung bzw. ein Betrieb einer Vorrichtung gemäß dem beschriebenen Verfahren erfolgen. Die Dosiergenauigkeit kann dann nämlich kleinteiliger und genauer geregelt werden.

Weiterhin ist das Verfahren vorteilhaft, wenn sich an dem mindestens einen Auslass der mindestens einen Pumpe eine Druckleitung anschließt, die zu einem Injektor zur dosierten Abgabe der Flüssigkeit führt, wobei die abgegebene Menge an Flüssigkeit über den Druck in der Druckleitung und die Öffnungszeit des Injektors einstellbar ist.

Die Pumpe der beschriebenen Vorrichtung wird dabei dazu genutzt, den Druck in der Druckleitung aufzubauen. An der Druckleitung ist vorzugsweise ein Drucksensor angeordnet, mit welchem der Druck in der Druckleitung überwacht wird. Immer wenn der Druck in der Druckleitung absinkt, wird die Pumpe aktiviert, um den Druck in der Druckleitung wieder aufzubauen.

Wenn eine derartig gestaltete Vorrichtung zur Durchführung des beschriebenen Verfahrens verwendet wird, ist es gegebenenfalls wünschenswert, dass die mit dem Injektor dosierte Menge an Flüssigkeit genau einem Vielfachen der Fördermenge entspricht, die von der Pumpe gefördert wird, wenn der Exzenter von einer vorgegebenen Parkposition in die nächste vorgegebene Parkposition bewegt wird. Gleichzeitig ermöglicht die Durchführung des beschriebenen Verfahrens, eine sehr genaue Dosierung der Flüssigkeit durchzuführen. Insbesondere wird die dosierte Menge der Flüssigkeit doppelt überwacht, nämlich zunächst durch die Kontrolle der Öffnungszeit des Injektors und zum anderen durch die (definierte) Förderung der Flüssigkeit mit Hilfe der Pumpe.

Weiterhin ist das beschriebene Verfahren vorteilhaft, wenn sich an den mindestens einen Auslass der mindestens einen Pumpe ein Druckspeicher und ein Injektor anschließen, und die Pumpe die Flüssigkeit in den Druckspeicher fördert, wobei die von der Vorrichtung abgegebene Menge an Flüssigkeit über den Druck in dem Druckspeicher und die Öffnungszeit des Injektors einstellbar ist.

Ein Druckspeicher ist üblicherweise durch eine Druckabhängigkeit seines Volumens gekennzeichnet. In Abhängigkeit davon, wie hoch der Druck im Druckspeicher ist, vergrößert oder verkleinert sich das Volumen des Druckspeichers. Eine Vorrichtung mit einem Druckspeicher kann vorzugsweise in einem Betriebsdruckbereich betrieben werden, der beispielsweise zwischen 5 bar und 10 bar liegen kann. Die mit dem Injektor während einer bestimmten Öffnungszeit zugegebene Menge an Flüssigkeit weist im Bereich der Betriebsdrücke nur eine geringe Abhängigkeit vom Druck auf. Daher muss der Druck in dem Druckspeicher nicht exakt einem festgelegten Druck entsprechen, um mit dem Injektor eine genaue Dosierung der Flüssigkeit durchführen zu können. Der Druckspeicher ermöglicht es allerdings, dass die von der Pumpe für einen Dosiervorgang geförderte Dosiermenge nicht exakt der tatsächlich am Injektor dosierten Menge entsprechen muss. Eine eventuell zu viel geförderte Menge an Flüssigkeit kann in dem Druckspeicher zwischengelagert werden. Genauso kann der Druckspeicher eine zu gering geförderte Menge an Flüssigkeit durch die Pumpe ausgleichen. Daher ermöglicht die Ausbildung eines Druckspeichers zwischen der Pumpe und dem Injektor eine exaktere Anpassung der tatsächlich mit dem Injektor dosierten Menge an Flüssigkeit als dies der Fall ist, wenn kein Druckspeicher zwischen der Pumpe und dem Injektor vorgesehen ist.

Es ist auch möglich, dass der Druckspeicher durch eine elastische bzw. flexible Druckleitung von dem Injektor zur Pumpe gebildet ist. Eine solche Druckleitung kann beispielsweise durch einen elastischen Kunststoffschlauch gebildet sein.

Weiterhin ist das Verfahren vorteilhaft, wenn die mindestens eine Pumpe ein minimales Fördervolumen aufweist, das von der mindestens einen Pumpe gefördert wird, wenn der Exzenter von einer vorgegebenen Parkposition in eine nächstliegende vorgegebene Parkposition weiter bewegt wird und der Druckspeicher ein maximales Druckspeicherbetriebsvolumen aufweist, um welches sich das Volumen des Druckspeichers verändert, wenn der Druck in dem Druckspeicher von einem minimalen Betriebsdruck auf einen maximalen Betriebsdruck ansteigt, wobei das maximale Druckspeicherbetriebsvolumen mindestens so groß ist, wie das minimale Fördervolumen.

Das minimale Fördervolumen wird durch das Volumen des Förderwegs innerhalb der Pumpe und die Anzahl der vorgesehenen Parkpositionen bei einer Umdrehung des Exzenters von 360° bestimmt. Der minimale Betriebsdruck und der maximale Betriebsdruck sind jeweils die Druckgrenzen, zwischen denen der Injektor der Vorrichtung betrieben werden kann, wenn eine genaue Dosierung mit Hilfe des Injektors erreicht werden soll. Der minimale Betriebsdruck bewirkt, dass der Druckspeicher ein minimales Druckspeichervolumen aufweist, welches während des regulären Betriebs auftreten kann. Der maximale Betriebsdruck bewirkt, dass der Druckspeicher ein maximales Druckspeicherbetriebsvolumen aufweist, welches während des regulären Betriebs der Vorrichtung auftreten kann. Der minimale Betriebsdruck kann beispielsweise 5 bar entsprechen. Der maximale Betriebsdruck kann beispielsweise 10 bar entsprechen. Das Druckspeicherbetriebsvolumen ist die Differenz zwischen diesem maximalen Druckspeichervolumen und dem minimalen Druckspeichervolumen des Druckspeichers während des regulären Betriebs. Wenn das Druckspeicherbetriebsvolumen größer ist als das minimale Fördervolumen der Pumpe, ist sichergestellt, dass mit Hilfe des Injektors jede beliebige Menge an Flüssigkeit dosiert werden kann, ohne dass für die Dosierung die Stellung des Exzenters der Pumpe berücksichtigt werden muss.

Weiterhin wird auch ein Kraftfahrzeug vorgeschlagen, zumindest aufweisend eine Verbrennungskraftmaschine, eine Abgasbehandlungsvorrichtung zur Reinigung der Abgase der Verbrennungskraftmaschine und eine Vorrichtung zur Förderung einer Flüssigkeit zu der Abgasbehandlungsvorrichtung, wobei die Vorrichtung dazu eingerichtet ist, gemäß einem beschriebenen Verfahren betrieben zu werden und die Flüssigkeit Harnstoff-Wasser-Lösung ist.

In der Abgasbehandlungsvorrichtung ist vorzugsweise ein SCR-Katalysator vorgesehen, mit welchem das Verfahren der selektiven katalytischen Reduktion durchgeführt werden kann, wobei Stickstoffoxidverbindungen im Abgas der Verbrennungskraftmaschine mit der Flüssigkeit zu unschädlichen Substanzen reduziert werden. Die Vorrichtung kann sämtliche hier im Zusammenhang mit dem beschriebenen Verfahren geschilderten Ausgestaltungsmerkmale aufweisen. Die Verfahrensschritte können beispielsweise in einer separaten Kontrolleinheit und/oder einer Steuerung der Verbrennungskraftmaschine abgelegt sein, wobei diese mit dem elektrischen Antrieb der mindestens einen Pumpe, dem Injektor, einem Drucksensor, einem Speicherelement für Grenzwerte, und dergleichen bedarfsgerecht interagieren kann.

Die Erfindung sowie das technische Umfeld werden nachfolgend anhand der Figuren näher erläutert. Es ist darauf hinzuweisen, dass die Figuren und insbesondere die in den Figuren dargestellten Größenverhältnisse nur schematisch sind. Es zeigen:
- Fig. 1:: eine erste Ausführungsvariante einer Pumpe,
- Fig. 2:: eine Vorrichtung, mit der das beschriebene Verfahren durchgeführt werden kann,
- Fig. 3:: eine zweite Ausführungsvariante einer Pumpe,
- Fig. 4:: eine dritte Ausführungsvariante einer Pumpe,
- Fig. 5:: ein Kraftfahrzeug, aufweisend eine Vorrichtung, mit der das beschriebene Verfahren durchgeführt werden kann,
- Fig. 6:: ein Diagramm des Drucks und des Volumens eines Druckspeichers einer Vorrichtung während der Durchführung des beschriebenen Verfahrens.

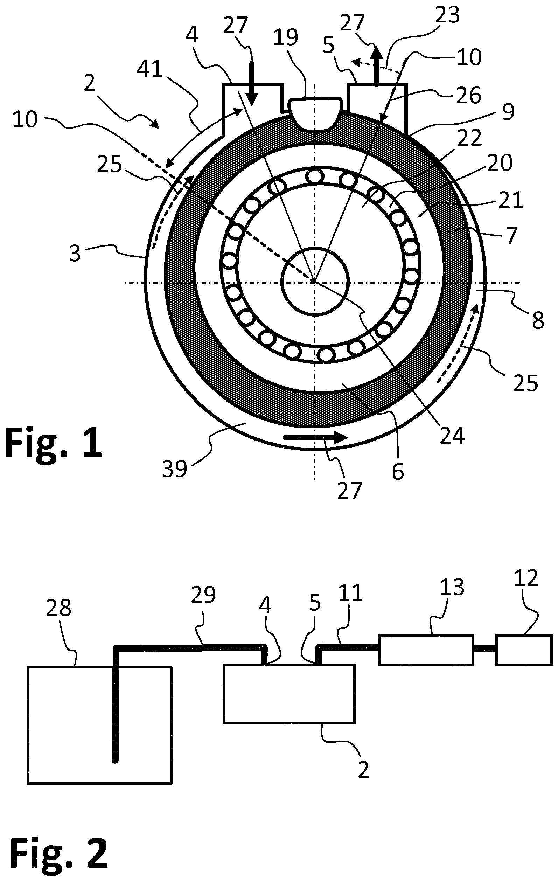

In Fig. 1 ist eine Pumpe 2 dargestellt, welche ein Pumpengehäuse 3 mit einem Einlass 4 und einem Auslass 5 aufweist. Innerhalb des Pumpengehäuses 3 ist ein Exzenter 6 angeordnet. Zwischen dem Exzenter 6 und dem Pumpengehäuse 3 befindet sich die verformbare Membran 7. Zwischen der verformbaren Membran 7 und dem Pumpengehäuse 3 existiert ein Förderweg 8, der von dem Einlass 4 zu dem Auslass 5 verläuft. Der Förderweg 8 ist an einer Stelle durch eine Abdichtung 9 abgedichtet (verschlossen). An der Abdichtung 9 liegt die verformbare Membran 7 direkt an dem Pumpengehäuse 3 an. Durch eine exzentrische Bewegung des Exzenters 6 kann die Abdichtung 9 verschoben werden. Dadurch geschieht eine Förderung der Flüssigkeit mit einer Förderrichtung 27 von dem Einlass 4 zu dem Auslass 5. Der Exzenter 6 ist in einen inneren Exzenterbereich 22 und in einen äußeren Lagerring aufgeteilt. Der innere Exzenterbereich 22 ist von dem äußeren Lagerring 21 durch ein Lager 20 getrennt. Wenn der Exzenterbereich 22 mit einer der Förderrichtung 27 entsprechenden Drehrichtung 23 um die Achse 24 gedreht wird, vollführt der Lagerring 21 die beschriebene exzentrische Bewegung. Zwischen dem Einlass 4 und dem Auslass 5 ist eine Trennung 19 vorgesehen, die hier als Nocke ausgeführt ist, welche die verformbare Membran 7 lokal zusammendrückt. Diese Trennung 19 verhindert eine Rückströmung der Flüssigkeit von dem Auslass 5 zurück zu dem Einlass 4.

Innerhalb des Förderwegs 8 liegt die Flüssigkeit während des Betriebs mit einem bestimmten Druck vor. Dieser Druck ist in den Bereichen des Förderwegs 8, welche mit dem Einlass 4 in Verbindung stehen, erheblich geringer als mit den Bereichen des Förderwegs 8, welche mit dem Auslass 5 in Verbindung stehen. Durch eine Ausrichtung der Parkposition 10 des Exzenters 6 derart, dass die Abdichtung 9 den Auslass 5 verschließt, wird erreicht, dass kein wesentlicher Teil des Förderwegs 8 mit dem Auslass 5 in Verbindung steht. So können die auf den Exzenter 6 wirkenden Tangentialkräfte 25 reduziert werden oder es kann sogar sichergestellt werden, dass diese Tangentialkräfte 25 sich gegenseitig ausgleichen. An dem Auslass 5 wirken dann lediglich Radialkräfte 26 auf den Exzenter 6, welche allerdings kein Drehmoment auf den Exzenter 6 ausüben.

In Fig. 1 ist auch eine alternative vorgegebene Parkposition 10 dargestellt, die in Förderrichtung 27 bzw. in Drehrichtung 23 um einen vorgegebenen Winkel 41 vor dem Auslass 4 der Pumpe 2 angeordnet ist. Der Exzenter 6 befindet sich gemäß Fig. 1 nicht in dieser alternativ vorgeschlagenen vorgegebenen Parkposition 10.

Fig. 2 zeigt eine Vorrichtung 1, aufweisend eine Pumpe 2 und eine Saugleitung 29, die einen Einlass 4 der Pumpe 2 mit einem Tank 28 verbindet sowie eine Druckleitung 11, die einen Auslass 5 der Pumpe 2 mit einem Injektor 12 verbindet. Die Druckleitung 11 bildet einen Druckspeicher 13 aus, in welchem unter Druck stehende Flüssigkeit gespeichert wird.

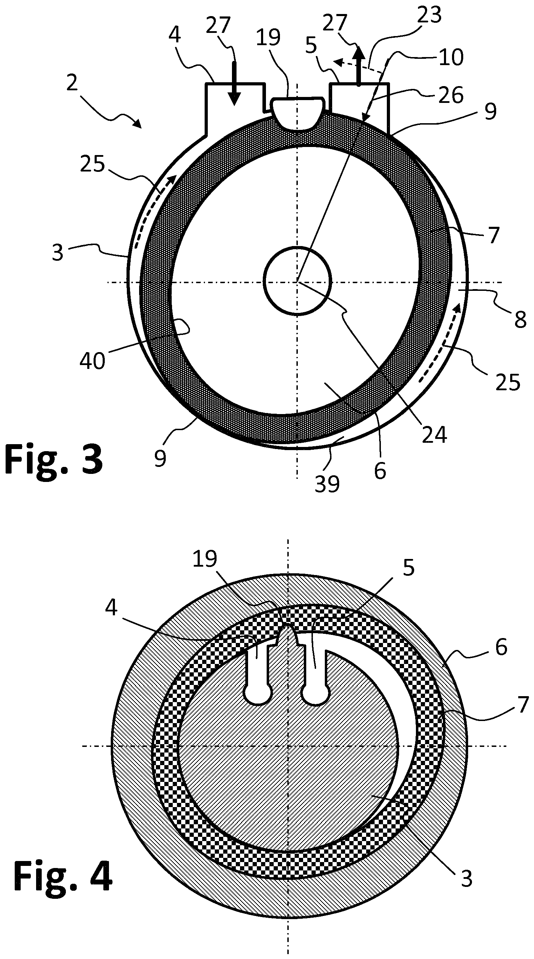

Fig. 3 zeigt eine zweite Ausführungsvariante einer Pumpe 2 für eine beschriebene Vorrichtung, die sich von der in Fig. 1 dargestellten Pumpe dadurch unterscheidet, dass der Exzenter 6 und die verformbare Membran 7 zwei Abdichtungen 9 ausbilden, welche durch eine Rotationsbewegung des Exzenters 6 relativ zu dem Pumpengehäuse 3 entlang des Förderwegs 8 bewegt werden. Bei dieser Ausführungsvariante einer Pumpe 2 sind auch zwei verschiedene vorgegebene Parkpositionen 10 vorgesehen, bei welchen der Auslass 5 der Pumpe 2 durch die Abdichtung 9 verschlossen ist. Die beiden vorgegebenen Parkpositionen 10 sind in einem Winkel von 180° zueinander angeordnet. Wenn der Exzenter 6 um 180° weiterbewegt wird, ist eine Bewegung des Exzenters 6 von einer vorgegebenen Parkposition 10 in die nächste vorgegebene Parkposition 10 möglich. Bei dieser Pumpe 2 ist allerdings keine Aufteilung des Exzenters 6 in einen Lagerring und einen Exzenterbereich gegeben. Der Exzenter 6 dreht sich bei dieser Ausführungsvariante derart, dass an einer Kontaktfläche 40 zwischen dem Exzenter 6 und der verformbaren Membran 7 Reibungskräfte auftreten, die durch eine entsprechende reibungsminimierte Gestaltung der Kontaktfläche 40 vermieden werden.

Fig. 4 zeigt sehr schematisch eine weitere Ausführungsvariante einer Pumpe 2, bei welchem das Pumpengehäuse 3 innen und der Exzenter 6 außen um das Pumpengehäuse 3 herum angeordnet ist. Auch hier befindet sich die verformbare Membran 7 zwischen dem Pumpengehäuse 3 und dem Exzenter 6. Der Einlass 4 und der Auslass 5 sind an dem Pumpengehäuse 3 angeordnet und es existiert eine Trennung 19 zur Verhinderung einer Rückströmung der Flüssigkeit von dem Auslass 5 zu dem Einlass 4.

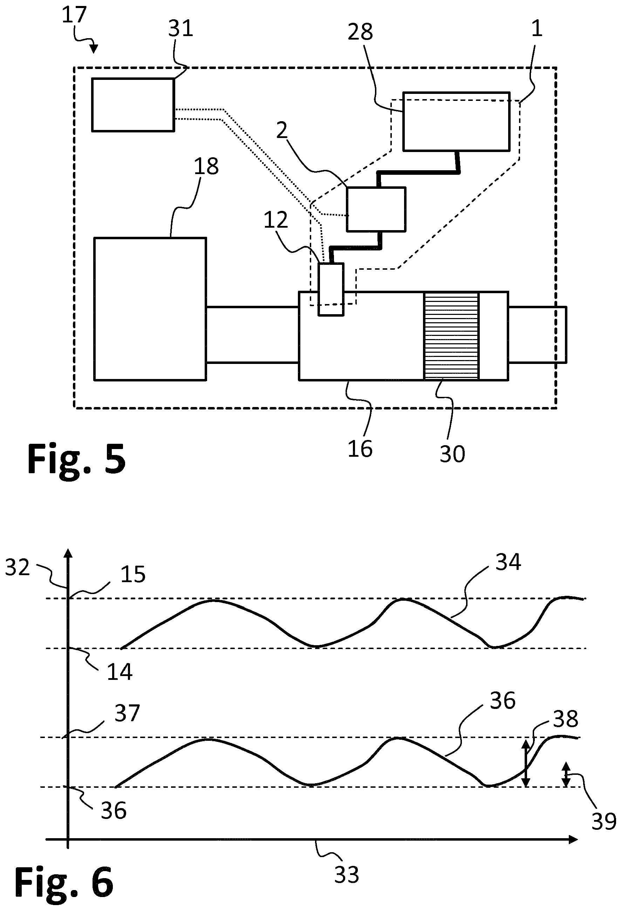

Fig. 5 zeigt ein Kraftfahrzeug 17, aufweisend eine Verbrennungskraftmaschine 18 und eine Abgasbehandlungsvorrichtung 16 zur Reinigung der Abgase der Verbrennungskraftmaschine 18, in welcher ein SCR-Katalysator 30 angeordnet ist.

Die Abgasbehandlungsvorrichtung 16 kann von einem Injektor 12 mit Flüssigkeit versorgt werden. Der Injektor 12 ist Bestandteil einer Vorrichtung 1, die die Flüssigkeit aus einem Tank 28 entnimmt und mit einer Pumpe 2 zu dem Injektor 12 fördert. Zumindest die Pumpe 2 und der Injektor 12 sind an ein Steuergerät 31 angeschlossen, mit welchem die Durchführung des beschriebenen Verfahrens erfolgen kann. Das beschriebene Verfahren kann in dem Steuergerät 31 als Routine implementiert sein.

Fig. 6 zeigt in einem Diagramm beispielhaft eine Druckkurve 34 und eine Volumenkurve 35, die jeweils auf der vertikalen Achse 32 über die Zeit auf der Zeitachse 33 aufgetragen sind. Die Druckkurve 34 tritt in einem Druckspeicher einer beschriebenen Vorrichtung bei der Durchführung des beschriebenen Verfahrens auf. Der Druck in dem Druckspeicher schwankt während der Durchführung des beschriebenen Verfahrens zwischen einem minimalen Betriebsdruck 14 und einem maximalen Betriebsdruck 15. In Abhängigkeit des Drucks stellt sich in dem Druckspeicher ein Druckspeichervolumen ein, welches mit der Volumenkurve 35 in dem Diagramm dargestellt ist. Das Volumen des Druckspeichers schwankt zwischen einem minimalen Druckspeichervolumen 36 und einem maximalen Druckspeichervolumen 37. Die Differenz zwischen dem minimalen Druckspeichervolumen 26 und dem maximalen Druckspeichervolumen 37 stellt das Druckspeicherbetriebsvolumen 38 dar. Dieses Druckspeicherbetriebsvolumen 38 ist größer als das minimale Fördervolumen 39, welches die Pumpe während der Förderung fördert, wenn der Exzenter von einer vorgegebenen Parkposition in die nächste vorgegebene Parkposition überführt wird.

Vorsorglich sei noch darauf hingewiesen, dass die in den Figuren gezeigten Kombinationen von technischen Merkmalen nicht generell zwingend sind. So können technische Merkmale einer Figur mit anderen technischen Merkmalen einer weiteren Figur und/oder der allgemeinen Beschreibung kombiniert werden. Etwas anderes soll nur gelten, wenn hier explizit die Kombination von Merkmalen ausgewiesen wurde und/oder der Fachmann erkennt, dass sonst die Grundfunktionen der Vorrichtung nicht mehr erfüllt werden können.

Das beschriebene Verfahren ist besonders vorteilhaft, weil eine genaue Dosierung der Flüssigkeit mit einer Vorrichtung erfolgen kann, wobei gleichzeitig ein minimaler Energiebedarf zur Durchführung der Förderung und der Dosierung auftritt.

### Bezugszeichenliste

- 1: Vorrichtung
- 2: Pumpe
- 3: Pumpengehäuse
- 4: Einlass
- 5: Auslass
- 6: Exzenter
- 7: verformbare Membran
- 8: Förderweg
- 9: Abdichtung
- 10: vorgegebene Parkposition
- 11: Druckleitung
- 12: Injektor
- 13: Druckspeicher
- 14: minimaler Betriebsdruck
- 15: maximaler Betriebsdruck
- 16: Abgasbehandlungsvorrichtung
- 17: Kraftfahrzeug
- 18: Verbrennungskraftmaschine
- 19: Trennung
- 20: Lager
- 21: Lagerring
- 22: Exzenterbereich
- 23: Drehrichtung
- 24: Achse
- 25: Tangentialkraft
- 26: Radialkraft
- 27: Förderrichtung
- 28: Tank
- 29: Saugleitung
- 30: SCR-Katalysator
- 31: Steuergerät
- 32: vertikale Achse
- 33: Zeitachse
- 34: Druckkurve
- 35: Volumenkurve
- 36: minimales Druckspeichervolumen
- 37: maximales Druckspeichervolumen
- 38: Druckspeicherbetriebsvolumen
- 39: minimales Fördervolumen
- 40: Kontaktfläche
- 41: vorgegebener Winkel

## Patentansprüche

1. Verfahren zum Betrieb einer Vorrichtung (1) zur dosierten Bereitstellung einer Flüssigkeit, zumindest aufweisend mindestens eine Pumpe (2) zur Förderung der Flüssigkeit, wobei die mindestens eine Pumpe (2) ein Pumpengehäuse (3) mit mindestens einem Einlass (4) und mindestens einem Auslass (5) aufweist, wobei an dem Pumpengehäuse (3) ein Exzenter (6) angeordnet ist und wobei zwischen dem Pumpengehäuse (3) und dem Exzenter (6) eine verformbare Membran (7) angeordnet ist, wobei die verformbare Membran (7) und das Pumpengehäuse (3) mindestens einen Förderweg (8) von dem mindestens einen Einlass (4) zu dem mindestens einen Auslass (5) begrenzen und mindestens eine Abdichtung (9) des Förderwegs ausbilden, wobei die mindestens eine Abdichtung (9) durch eine Bewegung des Exzenters (6) zur Förderung der Flüssigkeit entlang des Förderwegs (8) verschiebbar ist, und das Verfahren zumindest die folgenden Schritte aufweist:
a) Feststellen einer angeforderten Dosiermenge an Flüssigkeit;
b) Aktivieren der mindestens einen Pumpe (2), um mit der mindestens einen Pumpe (2) die Flüssigkeit zu fördern;
c) Festlegen eines Betriebsstopps der mindestens einen Pumpe (2), wenn die geförderte Menge Flüssigkeit der angeforderten Dosiermenge entspricht; und
d) Abschalten der mindestens einen Pumpe (2), wenn der Exzenter (6) sich in einer vorgegebenen Parkposition (10) befindet.

2. Verfahren nach Patentanspruch 1, wobei der Exzenter (6) sich in der vorgegebenen Parkposition (10) in einem Kräftegleichgewicht befindet.

3. Verfahren nach Patentanspruch 1 oder 2, wobei in der vorgegebenen Parkposition (10) die mindestens eine Abdichtung (9) den mindestens einen Auslass (5) der Pumpe (2) verschließt.

4. Verfahren nach einem der Patentansprüche 1 oder 2, wobei in der vorgegebenen Parkposition (10) die mindestens eine Abdichtung (9) in Förderrichtung (27) um einen vorgegebenen Winkel (41) hinter dem Einlass (4) der Pumpe (2) angeordnet ist.

5. Verfahren nach einem der vorhergehenden Patentansprüche, wobei die Pumpe (2) so aufgebaut ist, dass der Exzenter (6) bei einer vollständigen Umdrehung mindestens einmal die vorgegebene Parkposition (10) passiert.

6. Verfahren nach einem der vorhergehenden Patentansprüche, wobei sich an dem mindestens einen Auslass (5) der mindestens einen Pumpe (2) eine Druckleitung (11) anschließt, die zu einem Injektor (12) zur dosierten Abgabe der Flüssigkeit führt, wobei die abgegebene Menge an Flüssigkeit über den Druck in der Druckleitung (11) und die Öffnungszeit des Injektors (12) einstellbar ist.

7. Verfahren nach einem der vorhergehenden Patentansprüche, wobei sich an den mindestens einen Auslass (5) der Pumpe (2) ein Druckspeicher (13) und ein Injektor (12) anschließen, und die Pumpe (2) die Flüssigkeit in den Druckspeicher (13) fördert, wobei die von der Vorrichtung (1) abgegebene Menge an Flüssigkeit über den Druck in dem Druckspeicher (13) und die Öffnungszeit des Injektors (12) einstellbar ist.

8. Verfahren nach Patentanspruch 7, wobei der Druckspeicher (13) von einer elastischen Druckleitung (11) von der Pumpe (2) zu dem Injektor (12) gebildet ist.

9. Verfahren nach Patentanspruch 7 oder 8, wobei die mindestens eine Pumpe (2) ein minimales Fördervolumen (39) aufweist, das von der mindestens einen Pumpe (2) gefördert wird, wenn der Exzenter (6) von einer vorgegebenen Parkposition (10) in eine nächstliegende vorgegebene Parkposition (10) weiter bewegt wird und der Druckspeicher (13) ein maximales Druckspeicherbetriebsvolumen (38) aufweist, um welches sich das Volumen des Druckspeichers (13) verändert, wenn der Druck in dem Druckspeicher (13) von einem minimalen Betriebsdruck (14) auf einen maximalen Betriebsdruck (15) ansteigt, wobei das maximale Druckspeicherbetriebsvolumen (38) mindestens so groß ist, wie das minimale Fördervolumen (39).

10. Kraftfahrzeug (17), zumindest aufweisend eine Verbrennungskraftmaschine (18), eine Abgasbehandlungsvorrichtung (16) zur Reinigung der Abgase der Verbrennungskraftmaschine (18) und eine Vorrichtung zur Förderung einer Flüssigkeit zu der Abgasbehandlungsvorrichtung (16), wobei die Vorrichtung dazu eingerichtet ist, gemäß einem Verfahren nach einem der vorhergehenden Patentansprüche betrieben zu werden und die Flüssigkeit Harnstoff-Wasser-Lösung ist.

## Claims

1. Method for operating a device (1) for the dosed supply of a liquid, at least having at least one pump (2) for delivering the liquid, wherein the at least one pump (2) has a pump housing (3) with at least one inlet (4) and at least one outlet (5), wherein an eccentric (6) is arranged on the pump housing (3), and wherein a deformable diaphragm (7) is arranged between the pump housing (3) and the eccentric (6), wherein the deformable diaphragm (7) and the pump housing (3) delimit at least one delivery path (8) from the at least one inlet (4) to the at least one outlet (5) and form at least one seal (9) of the delivery path, wherein the at least one seal (9) is displaceable along the delivery path (8) by way of a movement of the eccentric (6) for the purposes of delivering the liquid, and the method has at least the following steps:
a) detecting a demanded dose amount of liquid;
b) activating the at least one pump (2) in order to deliver the liquid by means of the at least one pump (2);
c) scheduling a stoppage of operation of the at least one pump (2) when the delivered amount of liquid corresponds to the demanded dose amount; and
d) deactivating the at least one pump (2) when the eccentric (6) is situated in a predefined park position (10).

2. Method according to Patent Claim 1, wherein the eccentric (6) is in force equilibrium when in the predefined park position (10).

3. Method according to Patent Claim 1 or 2, wherein, in the predefined park position (10), the at least one seal (9) closes off the at least one outlet (5) of the pump (2).

4. Method according to either of Patent Claims 1 and 2,
wherein, in the predefined park position (10), the at least one seal (9) is arranged downstream of the inlet (4) of the pump (2) by a predefined angle (41) as viewed in the delivery direction (27).

5. Method according to one of the preceding patent claims, wherein the pump (2) is constructed such that the eccentric (6) passes through the predefined park position (10) at least once during one complete revolution.

6. Method according to one of the preceding patent claims,
wherein the at least one outlet (5) of the at least one pump (2) is adjoined by a pressure line (11) which leads to an injector (12) for the dosed dispensing of the liquid, wherein the dispensed amount of liquid can be adjusted by way of the pressure in the pressure line (11) and the opening time of the injector (12).

7. Method according to one of the preceding patent claims,
wherein the at least one outlet (5) of the pump (2) is adjoined by a pressure accumulator (13) and an injector (12), and the pump (2) delivers the liquid into the pressure accumulator (13), wherein the amount of liquid dispensed by the device (1) can be adjusted by way of the pressure in the pressure accumulator (13) and the opening time of the injector (12).

8. Method according to Patent Claim 7, wherein the pressure accumulator (13) is formed by an elastic pressure line (11) from the pump (2) to the injector (12).

9. Method according to Patent Claim 7 or 8, wherein the at least one pump (2) has a minimum delivery volume (39), which is delivered by the at least one pump (2) when the eccentric (6) is moved onward from one predefined park position (10) into a next predefined park position (10), and the pressure accumulator (13) has a maximum pressure accumulator operating volume (38), by which the volume of the pressure accumulator (13) changes when the pressure in the pressure accumulator (13) increases from a minimum operating pressure (14) to a maximum operating pressure (15), wherein the maximum pressure accumulator operating volume (38) is at least equal to the minimum delivery volume (39).

10. Motor vehicle (17), at least having an internal combustion engine (18), an exhaust-gas treatment device (16) for the purification of the exhaust gases of the internal combustion engine (18), and a device for delivering a liquid to the exhaust-gas treatment device (16), wherein the device is designed to be operated in accordance with a method according to one of the preceding patent claims, and the liquid is urea-water solution.

## Revendications

1. Procédé pour faire fonctionner un dispositif (1) de distribution de liquide de manière dosée, au moins présentant au moins une pompe (2) pour refouler le liquide, l'au moins une pompe (2) présentant un boîtier de pompe (3) avec au moins une entrée (4) et au moins une sortie (5), un excentrique (6) étant disposé au niveau du boîtier de pompe (3) et une membrane déformable (7) étant disposée entre le boîtier de pompe (3) et l'excentrique (6), la membrane déformable (7) et le boîtier de pompe (3) délimitant au moins un chemin de refoulement (8) depuis l'au moins une entrée (4) jusqu'à l'au moins une sortie (5) et constituant au moins un joint d'étanchéité (9) du chemin de refoulement, l'au moins un joint d'étanchéité (9) pouvant être déplacé par un déplacement de l'excentrique (6) en vue de refouler le liquide le long du chemin de refoulement (8), et le procédé présentant au moins les étapes suivantes :
a) établissement d'une quantité exigée de fluide à doser ;
b) activation de l'au moins une pompe (2) afin de refouler le liquide avec l'au moins une pompe (2) ;
c) établissement d'un arrêt de fonctionnement de l'au moins une pompe (2) lorsque la quantité de fluide refoulée correspond à la quantité exigée à doser ; et
d) coupure de l'au moins une pompe (2) lorsque l'excentrique (6) se trouve dans une position d'immobilisation prédéfinie (10).

2. Procédé selon la revendication 1, dans lequel l'excentrique (6) se trouve en équilibre de forces dans la position d'immobilisation prédéfinie (10).

3. Procédé selon la revendication 1 ou 2, dans lequel, dans la position d'immobilisation prédéfinie (10), l'au moins un joint d'étanchéité (9) ferme l'au moins une sortie (5) de la pompe (2).

4. Procédé selon l'une quelconque des revendications 1 ou 2, dans lequel, dans la position d'immobilisation prédéfinie (10), l'au moins un joint d'étanchéité (9) est disposé dans la direction de refoulement (27) suivant un angle prédéfini (41) derrière l'entrée (4) de la pompe (2).

5. Procédé selon l'une quelconque des revendications précédentes, dans lequel la pompe (2) est construite de telle sorte que l'excentrique (6), dans le cas d'une rotation complète, passe au moins une fois par la position d'immobilisation prédéfinie (10).

6. Procédé selon l'une quelconque des revendications précédentes, dans lequel une conduite de pression (11) est raccordée au niveau de l'au moins une sortie (5) de l'au moins une pompe (2), laquelle conduite de pression conduit à un injecteur (12) pour délivrer le liquide de manière dosée, la quantité de liquide délivrée pouvant être ajustée par le biais de la pression dans la conduite de pression (11) et du temps d'ouverture de l'injecteur (12).

7. Procédé selon l'une quelconque des revendications précédentes, dans lequel un accumulateur de pression (13) et un injecteur (12) se raccordent à l'au moins une sortie (5) de la pompe (2), et la pompe (2) refoule le liquide dans l'accumulateur de pression (13), la quantité de liquide délivrée par le dispositif (1) pouvant être ajustée par le biais de la pression dans l'accumulateur de pression (13) et du temps d'ouverture de l'injecteur (12).

8. Procédé selon la revendication 7, dans lequel l'accumulateur de pression (13) est formé par une conduite de pression élastique (11) allant de la pompe (2) à l'injecteur (12).

9. Procédé selon les revendications 7 ou 8, dans lequel l'au moins une pompe (2) présente un volume de refoulement minimal (39) qui est refoulé par l'au moins une pompe (2) lorsque l'excentrique (6) est déplacé davantage depuis une position d'immobilisation prédéfinie (10) dans une position d'immobilisation prédéfinie immédiatement suivante (10) et l'accumulateur de pression (13) présente un volume de fonctionnement d'accumulateur de pression maximal (38) autour duquel le volume de l'accumulateur de pression (13) varie lorsque la pression dans l'accumulateur de pression (13) passe d'une pression de fonctionnement minimale (14) à une pression de fonctionnement maximale (15), le volume de fonctionnement d'accumulateur de pression maximal (38) étant au moins aussi grand que le volume de refoulement minimal (39).

10. Véhicule automobile (17), présentant au moins un moteur à combustion interne (18), un dispositif de traitement des gaz d'échappement (16) pour purifier les gaz d'échappement du moteur à combustion interne (18) et un dispositif pour refouler un liquide vers le dispositif de traitement de gaz d'échappement (16), le dispositif étant prévu pour fonctionner conformément à un procédé selon l'une quelconque des revendications précédentes et le liquide étant une solution d'urée et d'eau.
